Europäisches Patentamt

European Patent Office

Office européen des brevets

(11) Publication number: **0 534 435 B1**

# EUROPEAN PATENT SPECIFICATION

(45) Date of publication of patent specification: **13.12.95**  (51) Int. Cl.6: **G01C 19/72**

(21) Application number: **92116374.7**

(22) Date of filing: **24.09.92**

(54) **Fiber optic gyro**

(30) Priority: **25.09.91 JP 245966/91**

(43) Date of publication of application:
**31.03.93 Bulletin 93/13**

(45) Publication of the grant of the patent:
**13.12.95 Bulletin 95/50**

(84) Designated Contracting States:
**DE FR GB**

(56) References cited:
**EP-A- 0 260 885
WO-A-92/11509**

**ELECTRONICS LETTERS vol. 16, no. 25, December 1980, STEVENAGE GB pages 941 - 942 HOTATE ET AL. 'Rotation detection by optical fibre laser gyro with easily introduced phase-difference bias'**

**OPTICS LETTERS. vol. 7, no. 12, December 1982, NEW YORK US pages 623 - 625 PETERMANN 'Intensity-dependent nonreciprocal phase shift in fiber-optic gyroscopes for light sources with low coherence'**

(73) Proprietor: **JAPAN AVIATION ELECTRONICS INDUSTRY, LIMITED
21-6, Dogenzaka 1-chome
Shibuya-ku
Tokyo (JP)**

(72) Inventor: **Motohara, Shinji, c/o Japan Aviation Elec. Ind.Ltd
21-6, Dogenzaka 1-chome,
Shibuya-ku
Tokyo (JP)**
Inventor: **Ohno, Aritaka, c/o Japan Aviation Elec. Ind. Ltd.
21-6, Dogenzaka 1-chome,
Shibuya-ku
Tokyo (JP)**

(74) Representative: **Hoffmann, Eckart, Dipl.-Ing.
Patentanwalt,
Bahnhofstrasse 103
D-82166 Gräfelfing (DE)**

## Description

BACKGROUND OF THE INVENTION

The present invention relates to a fiber optic gyro which propagates clockwise and counterclockwise light beams through an optical fiber coil and detects the phase difference between the both light beams to thereby measure an angular rate applied to the optical fiber coil about the axis thereof.

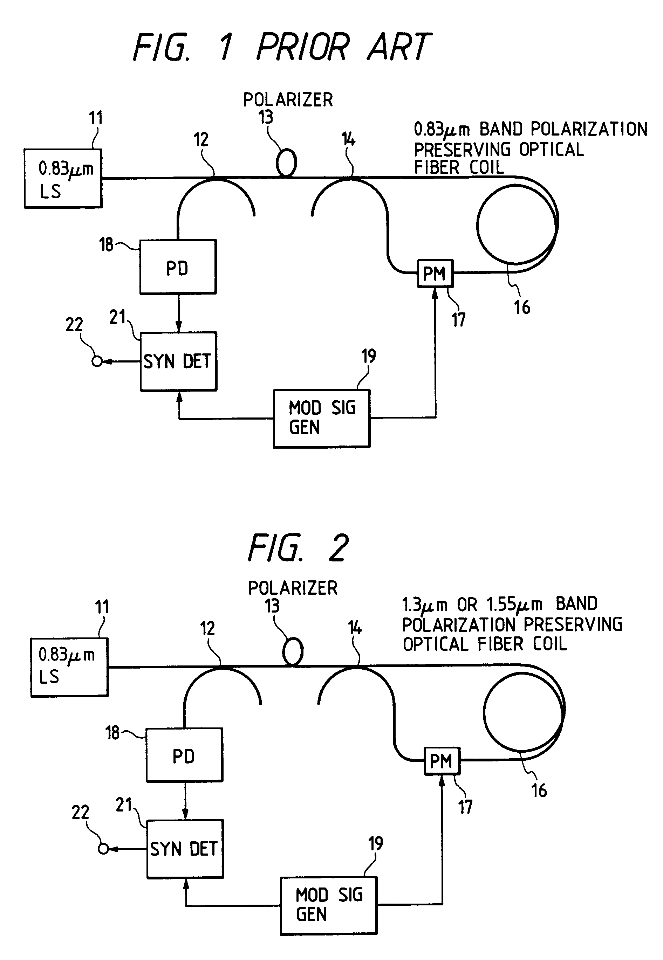

Fig. 1 schematically shows a conventional fiber optic gyro. Light emitted from a light source 11 passes through an optical fiber coupler 12 or similar optical member and enters a polarizer 13, wherein only a component of a predetermined direction of polarization is picked out. The light from the polarizer 13 is split by an optical fiber coupler 14 or the like into two light beams, the one of which is applied as a clockwise light beam to one end of an optical fiber coil 16 and the other of which is applied as a counterclockwise light beam to the other end of the optical fiber coil 16.

The clockwise and counterclockwise light beams, which have thus propagated through the optical fiber coil 16, are combined by the optical coupler 14 into interference light. The interference light enters the polarizer 13, wherein only a component of a predetermined direction of polarization is picked out. The light having thus passed through the polarizer 13 is branched by the optical coupler 12 to a photodetector 18, wherein it is converted into an electrical signal corresponding to its intensity. A periodic function signal, for example, a sine-wave signal, which is provided from a modulation signal generator 19, is used to drive an optical phase modulator 17, which modulates the phase of light passing therethrough. The output from the photodetector 18 is applied to a synchronous detector 21, wherein it is synchronously detected by a reference signal from the modulation signal generator 19, and the detected output is provided to an output terminal 22.

When no angular rate is being applied to the optical fiber coil 16 about the axis thereof, no phase difference is caused between the clockwise and counterclockwise light beams which have propagated through the optical fiber coil 16, and no output is provided from the synchronous detector 21 either. When an angular rate is applied to the optical fiber coil 16 about the axis thereof, a phase difference is introduced between the clockwise and counterclockwise light beams accordingly, and the synchronous detector 21 yields an output of a polarity and level corresponding to the direction and magnitude of the applied angular rate. Thus, the applied angular rate can be detected.

The prior art employs, as the light source 11, a low-cost one that emits light of a short wave-length region (0.8 to 0.9 μm) and is used as a light source for mass-produced industrial products such as CD players. Accordingly, the optical fiber coil 16 is also formed using a polarization preserving optical fiber coil for the short wave-length region.

Since optical fibers are mostly used as transmission lines of optical communication, optical fibers for the long wave-length region (1.2 to 1.7 μm), which are intended to propagate therethrough light of the long wave-length region, are manufactured in quantities at low cost. On the other hand, optical fibers for the short wave-length region are utilized solely for specific purposes and they are manufactured in small quantity and are relatively expensive. This inevitably raises the manufacturing costs of conventional fiber optic gyros employing the optical fibers intended for the short wave-length region.

A fiber optic gyro according to the first portion of claim 1 is disclosed in the document ELECTRONICS LETTERS vol. 16, no. 25 (December 1980), p. 941-942 "Rotation detection by optical fibre laser gyro with easily introduced phase-difference bias". This prior art describes use of an HeNe-laser emitting at 633 nm as the light source and a single-mode optical fiber for 820 nm.

The document EP-A-0 260 885 discloses a fiber optic gyro comprising light source means, an optical fiber coil, optical coupler means for splitting light received from said light source means via polarizing means into two light beams, said optical coupler means being arranged to apply said two light beams as clockwise and counterclockwise light beams to both ends of the optical fiber coil, respectively, and for receiving said clockwise and counterclockwise light beams after they have propagated through said optical fiber coil and combing them to interference light, and photodetector means for converting said interference light into an electrical signal representing an angular rate applied to said optical fiber coil about its axis. In this prior art the optical fiber coil is made of an ordinary single mode fiber and combined with a polarization maintaining module, thereby reducing costs compared to such prior art that uses a polarization preserving fiber for the optical fiber coil.

Summery of the invention

It is an object of the present invention to provide a low-cost fiber optic gyro with utilizes the optical fiber for the long wave-length region and the light source for the short wave-length region which are relatively inexpensive.

This object is achieved with a fiber optic gyro as claimed in claim 1.

Preferred embodiments of the invention are subject-matter of the dependent claims.

Properly speaking, when light of the short wave-length region is incident to the optical fiber for the long wave-length region, the light propagates through the optical fiber in a multimode. Hence, a fiber optic gyro with its optical fiber coil formed by the optical fiber for the long wave-length region is expected to suffer errors larger than in an ordinary case. However, when the optical fiber for the long wave-length region is wound around a coil bobbin to form a coil, the radius of curvature of the optical fiber becomes relatively small and the transmission out-off wave-length of the optical fiber shifts to the short wavelength side, making it possible to suppress the generation of higher modes. The fiber optic gyro of the present invention utilizes this effect and employs an optical fiber coil formed by winding an optical fiber as long as tens to hundreds of meters around a small-diametered coil bobbin so as to increase the number of turns of the coil, and hence the generation of higher modes can sufficiently be suppressed. This affords sufficient reduction of measurement errors of the fiber optic gyro although it utilizes the optical fiber coil formed by the low-cost optical fiber used in the past for the long wave-length region.

## BRIEF DESCRIPTION OF THE DRAWINGS

Fig. 1 is a block diagram showing a conventional fiber optic gyro;

Fig. 2 is a block diagram illustrating an embodiment of the fiber optic gyro according to the present invention;

Fig. 3 is a block diagram illustrating another embodiment of the present invention; and

Fig. 4 is a block diagram illustrating still another embodiment of the present invention.

## DESCRIPTION OF THE PREFERRED EMBODIMENTS

In general, the normalized frequency V of an optical fiber can be expressed by the following equation;

$$V = (2\Delta)^{1/2} \cdot \pi n \cdot 2a/\lambda \qquad (1)$$

where $\Delta$ is a core/cladding specific refractive index difference, n is the refractive index of the core, a is the radius of the core, and $\lambda$ is the wavelength of the light source used.

Now, the number of modes, which may occur in the cases where light from a light source of a 0.83 $\mu$m wavelength is applied to an optical fiber for 0.83 $\mu$m wavelength use and an optical fiber for a 1.3 $\mu$m wavelength use, respectively, is calculated using Eq. (1). Letting the normalized frequencies of the optical fibers be $V_1$ and $V_2$, re-

spectively,

$$V_1 = 1.77$$
$$V_2 = 4.07$$

In this instance, it is assumed that the optical fiber for the 0.83 $\mu$m wavelength use is 0.4 in the aforementioned specific refractive index difference ($\Delta$) and 3.6 $\mu$m in diameter (2a) and the optical fiber for the 1.3 $\mu$m wavelength use is 8.3 $\mu$m in diameter (2a). The highest mode M in this case is expressed, in general, as follows:

$$V/(\pi/2) = 1 < M \leq V/(\pi/2) \qquad (2)$$

Values $M_1$ and $M_2$ of the integer M which satisfy the inequality (2), obtained by substituting the normalized frequencies $V_1$ and $V_2$ into Eq. (2), are given as follows:

$$M_1 = 1$$
$$M_2 = 2$$

This indicates that when the optical fiber for the 0.83 $\mu$m wavelength use is used with the light source of the 0.83 $\mu$m wavelength, that is, when an optical fiber is suitable for use with the light source, the higher mode is only the first-order mode and that even if the optical fiber for the 1.3 $\mu$m wavelength use is used with the light source of the 0.83 $\mu$m wavelength, that is, even if the optical fiber is not suitable for use with the light source, only the second-order mode occurs. The second-order mode is one that occurs when the optical fiber is used as usual, without being bent sharply. Hence, in the case of a small-diametered optical fiber coil like the optical fiber coil for the fiber optic gyro, it is expected that the second-order mode would leak out during propagation of light. In other words, even when the optical fiber for the long wave-length region is used with the short wavelength light source, there is no fear of deteriorating the performance of the fiber optic gyro. The same is true of a polarization preserving optical fiber and a single-mode optical fiber, too.

Fig. 2 illustrates an embodiment of the present invention, in which the parts corresponding to those in Fig. 1 are identified by the same reference numerals. This embodiment is identical in construction with the prior art example of Fig. 1 except that the light source 11 is one that emits light of the 0.83 $\mu$m wavelength and that the optical fiber coil 16 is formed by a polarization preserving optical fiber for the 1.3 $\mu$m region. The optical fiber coil 16 may also be formed by a polarization preserving optical fiber coil for a 1.55 $\mu$m region.

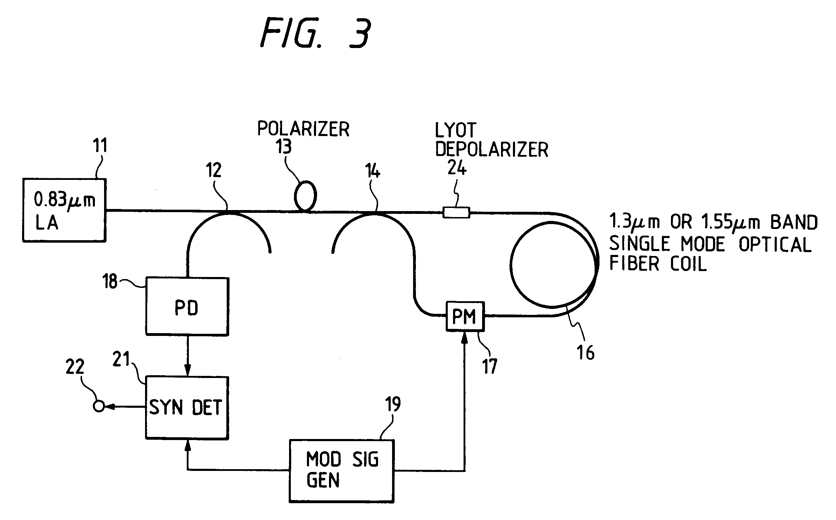

As shown in Fig. 3, the light source 11 is one that emits light of the 0.83 $\mu$m wavelength, the

optical fiber coil 16 is formed by a single mode optical fiber for the 1.3 or 1.55 $\mu$m region, and a LYOT depolarizer 24 is connected in series to one end of the optical fiber coil 16. Components perpendicular to the direction of polarization develop in the optical fiber coil 16 formed by the single mode optical fiber, but these polarized components perpendicular to each other are rendered by the depolarizer 24 to have the same intensity and a large phase difference so that they have no correlation or do not interfere with each other. This prevents interference between the one polarized component of the clockwise light beam having propagated through the optical fiber coil 16 and the other polarized component of the counterclockwise light. The condition on which the clockwise and counterclockwise light beams do not interfere with each other is given by the following equation:

$$Loh \times 2\pi/\lambda < \Delta 8$$

where Loh is the coherent length of the light source and $\Delta 8$ is the phase difference between the both light beams.

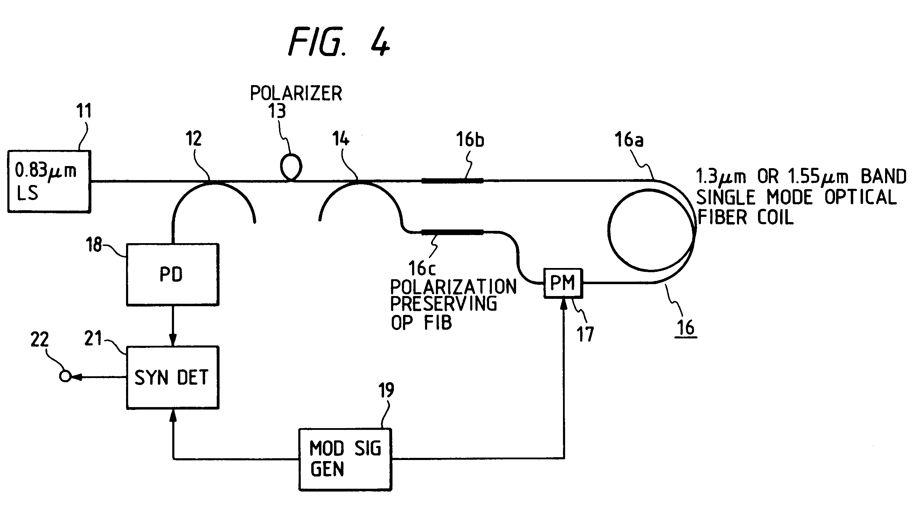

As depicted in Fig 4, the light source 11 is one that emits light of the 0.83 $\mu$m wavelength and the optical fiber coil 16 is composed of a coil 16a formed by a single mode optical fiber for the 1.3 or 1.55 $\mu$m region and polarization preserving optical fibers 16b and 16c for the 1.3 or 1.5 $\mu$m region which connect the both ends of the optical fiber coil 16a and the optical coupler 14. The phase difference between the component perpendicular to the direction of polarization, which is produced in the single mode optical fiber coil 16a, and the original polarized component is increased in the polarization preserving optical fibers 16b and 16c and the single mode optical fiber coil 16a. The polarization preserving optical fibers 16a and 16b may partly be wound together with the single mode optical fiber coil 16a.

In the above, the optical couplers 12 and 14 may also be formed by optical ICs. While in the above the present invention has been described as being applied to an open loop fiber optic gyro, the invention is applicable to a closed loop fiber optic gyro as well.

As described above, the fiber optic gyro according to the present invention employs a low-cost light source for the short wave-length region and an optical fiber coil formed by an inexpensive optical fiber for the long wave-length region, and hence can be fabricated at low cost as a whole. Moreover, the higher mode which occurs in the optical fiber for the long wave-length region is discharged to the outside by the winding of the optical fiber coil, and hence there is no fear of the higher mode increasing errors of the fiber optic gyro.

It will be apparent that many modifications and variations may be effected without departing from the scope of the appended claims.

**Claims**

1. A fiber optic gyro, comprising
   light source means (11),
   an optical fiber coil (16) formed by winding an optical fiber around a small-diametered coil bobbin so as to increase the number of turns of the coil and hence to suppress the generation of higher modes,
   optical coupler means (14) for splitting light received from said light source means (11) via polarizing means (13) into two light beams, said optical coupler means (14) being arranged to apply said two light beams as clockwise and counterclockwise light beams to both ends of the optical fiber coil (16), respectively, and for receiving said clockwise and counterclockwise light beams after they have propagated through said optical fiber coil and combining them to interference light, and
   photodetector means for converting said interference light into an electrical signal representing an angular rate applied to said optical fiber coil about its axis,
   **characterized** in that
   said light source means (11) emits light within a wave-length region of 0.8 to 0.9 $\mu$m, and said optical fiber coil is formed from an optical fiber for a wave-length region of 1.2 to 1.7 $\mu$m.

2. The fiber optic gyro of claim 1, wherein said optical fiber coil (16) is a polarization preserving optical fiber coil.

3. The fiber optic gyro of claim 1, wherein said optical fiber coil (16) is formed from a single mode optical fiber and a LYOT depolarizer (24) is connected to one end of said optical fiber coil such as to prevent components of said clockwise and counterclockwise light beams polarized perpendicularly to each other, to interfere with each other.

4. The fiber optic gyro of claim 1, wherein said optical fiber coil (16) is formed from a single mode optical fiber whose ends are each connected to said optical coupler means (14) via a respective polarization preserving optical fiber (16b, 16c) such as to prevent components of said clockwise and counterclockwise light beams polarized perpendicularly to each other, to interfere with each other.

## Patentansprüche

1. Faseroptisches Gyroskop, umfassend

   eine Lichtquelleneinrichtung (11),

   eine optische Faserspule (16), die durch Wickeln einer optischen Faser um einen Spulenkörper kleinen Durchmessers gebildet ist, um die Windungszahl der Spule zu erhöhen und damit die Erzeugung höherer Moden zu unterdrücken,

   eine optische Kopplereinrichtung (14) zum Aufteilen von über eine Polarisationseinrichtung (13) von der Lichtquelleneinrichtung (11) empfangenem Licht in zwei Lichtstrahlen, wobei die optische Kopplereinrichtung (14) so angeordnet ist, daß sie die beiden Lichtstrahlen als Uhrzeigersinn- bzw. Gegenuhrzeigersinn-Lichtstrahl an die beiden Enden der optischen Faserspule (16) anlegt und den Uhrzeigersinn- und den Gegenuhrzeigersinn-Lichtstrahl, nachdem diese die optische Faserspule durchlaufen haben, empfängt und sie zu Interferenzlicht zusammenführt, und

   eine Fotodetektoreinrichtung zur Umsetzung des Interferenzlichts in eine elektrisches Signal, das die an die optische Faserspule um ihre Achse angelegte Winkelgeschwindigkeit repräsentiert,

   dadurch gekennzeichnet, daß

   die Lichtquelleneinrichtung (11) Licht innerhalb eines Wellenlängenbereichs von 0,8 bis 0,9 $\mu$m emittiert und die optische Faserspule aus einer optischen Faser für einen Wellenlängenbereich von 1,2 bis 1,7 $\mu$m gebildet ist.

2. Faseroptisches Gyroskop nach Anspruch 1, bei der die optische Faserspule (16) eine polarisations-bewahrende optische Faserspule ist.

3. Faseroptisches Gyroskop nach Anspruch 1, bei der die optische Faserspule (16) aus einer optischen Einmoden-Faser gebildet ist und ein LYOT-Depolarisator (24) mit einem Ende der optischen Faserspule verbunden ist, um zu verhindern, daß Komponenten des Uhrzeigersinn- und des Gegenuhrzeigersinn-Lichtstrahls, die senkrecht zueinander polarisiert sind, miteinander interferieren.

4. Faseroptisches Gyroskop nach Anspruch 1, bei der die optische Faserspule (16) aus einer optischen Einmoden-Faser gebildet ist, deren Enden je über eine jeweilige polarisationsbewahrende optische Faser (16b, 16c) mit der optischen Kopplereinrichtung (14) verbunden sind, damit verhindert wird, daß Komponenten des Uhrzeigersinn- und des Gegenuhrzeigersinn-Lichtstrahls, die senkrecht zueinander polarisiert sind, miteinander interferieren.

## Revendications

1. Gyromètre à fibre optique comprenant :

   un moyen formant source de lumière (11) ;

   une bobine de fibre optique (16), formée par enroulement d'une fibre optique autour d'un support de bobine de petit diamètre de façon à augmenter le nombre de tours de la bobine et donc à supprimer la production des modes plus élevés ;

   un moyen de couplage optique (14) pour diviser en deux faisceaux de lumière la lumière reçue dudit moyen formant source de lumière (11) par l'intermédiaire d'un moyen de polarisation (13), ledit moyen de couplage optique (14) étant agencé pour délivrer lesdits deux faisceaux de lumière en tant que faisceaux de lumière dans le sens des aiguilles d'une montre et dans le sens contraire des aiguilles d'une montre, respectivement, aux deux extrémités de la bobine de fibre optique (16), et pour recevoir lesdits faisceaux de lumière dans le sens des aiguilles d'une montre et dans le sens contraire des aiguilles d'une montre après qu'ils se sont propagés dans ladite bobine de fibre optique et pour les combiner en une lumière d'interférence ; et

   un moyen photodétecteur pour convertir ladite lumière d'interférence en un signal électrique représentant une vitesse angulaire appliquée à ladite bobine de fibre optique autour de son axe ;

   caractérisé en ce que :

   ledit moyen formant source de lumière (11) émet de la lumière dans une gamme de longueurs d'onde de 0,8 à 0,9 $\mu$m, et en ce que ladite bobine de fibre optique est formée d'une fibre optique pour une gamme de longueurs d'onde de 1,2 à 1,7 $\mu$m.

2. Gyromètre à fibre optique selon la revendication 1, dans lequel ladite bobine de fibre optique (16) est une bobine de fibre optique à conservation de polarisation.

3. Gyromètre à fibre optique selon la revendication 1, dans lequel ladite bobine de fibre optique (16) est formée d'une fibre optique monomode ; et dans lequel un dépolariseur de Lyot (24) est connecté à une extrémité de ladite bobine de fibre optique de façon à empêcher les composantes desdits faisceaux de lumière dans le sens des aiguilles d'une montre et dans le sens contraire des aiguilles d'une montre, polarisées perpendiculairement les unes aux autres, d'interférer les unes avec les autres.

4. Gyromètre à fibre optique selon la revendication 1, dans lequel ladite bobine de fibre optique (16) est formée à partir d'une fibre optique monomode dont les extrémités sont chacune raccordées audit moyen de couplage optique (14) par l'intermédiaire d'une fibre optique à conservation de polarisation (16b, 16c) respective, de façon à empêcher les composantes desdits faisceaux de lumière dans le sens des aiguilles d'une montre et dans le sens contraire des aiguilles d'une montre, polarisées perpendiculairement les unes aux autres, d'interférer les unes avec les autres.

# FIG. 1 PRIOR ART

POLARIZER
13

11

12

14

0.83μm BAND POLARIZATION
PRESERVING OPTICAL
FIBER COIL

0.83μm
LS

18

PD

22    21

SYN DET

PM

17

16

19

MOD SIG
GEN

# FIG. 2

POLARIZER
13

11

12

14

1.3μm OR 1.55μm BAND
POLARIZATION PRESERVING
OPTICAL FIBER COIL

0.83μm
LS

18

PD

22    21

SYN DET

PM

17

16

19

MOD SIG
GEN

7

# FIG. 3

POLARIZER 13

LYOT DEPOLARIZER 24

11

0.83μm LA

12

14

1.3μm OR 1.55μm BAND SINGLE MODE OPTICAL FIBER COIL

18

PD

PM

16

17

22  21

SYN DET

19

MOD SIG GEN

# FIG. 4

POLARIZER
13

11 — 0.83μm LS

12

14

16b

16a
1.3μm OR 1.55μm BAND SINGLE MODE OPTICAL FIBER COIL

18 — PD

16c
POLARIZATION PRESERVING OP FIB

PM
17

16

22 — 21 — SYN DET

19 — MOD SIG GEN

EP 0 534 435 B1

9